## Europäisches Patentamt
## European Patent Office
## Office européen des brevets

(11) Veröffentlichungsnummer: **0 249 031**
**A2**

(19)

(12)
# EUROPÄISCHE PATENTANMELDUNG

(21) Anmeldenummer: **87106630.4**

(22) Anmeldetag: **07.05.87**

(51) Int. Cl.⁴: **G01N 21/88** , G01N 21/43 , B60S 1/02

(30) Priorität: **07.06.86 DE 3619208**

(43) Veröffentlichungstag der Anmeldung: **16.12.87 Patentblatt 87/51**

(84) Benannte Vertragsstaaten: **DE FR GB IT SE**

(71) Anmelder: **ROBERT BOSCH GMBH
Postfach 50
D-7000 Stuttgart 1(DE)**

(72) Erfinder: **Domann, Helmut
Lohlenbachweg 3a
D-7250 Leonberg(DE)**
Erfinder: **Heintz, Frieder, Dipl.-Ing.
Fleckensteinstrasse 14
D-7505 Ettlingen 7(DE)**
Erfinder: **Hugel, Robert, Dipl.-Phys.
J.-v.-Eichendorff-Strasse 9
D-7500 Karlsruhe 51(DE)**
Erfinder: **Knoll, Peter, Dr.-Ing.
Albert-Schweitzer-Strasse 9
D-7505 Ettlingen(DE)**
Erfinder: **König, Winfried, Dr.-Ing.
Murgstrasse 9
D-7507 Pfinztal-Berghausen(DE)**
Erfinder: **Lindae, Gerhard, Dipl.-Ing.
Im Brühl 23
D-7250 Leonberg(DE)**
Erfinder: **Perthus, Peter
Artusweg 21
D-7000 Stuttgart 30(DE)**
Erfinder: **Riedel, Georg
Ellmendinger Strasse 7c
D-7500 Karlsruhe 41(DE)**
Erfinder: **Wolf, Konrad, Dipl.-Ing.
Fontaneweg 6
D-7519 Walzbachtal 2(DE)**
Erfinder: **Zabler, Erich, Dr.-Ing.
Brunhildstrasse 11
D-7513 Stutensee 1(DE)**

(54) **Vorrichtung zum optischen Erfassen von Fremdkörpern.**

(57) An der Innenseite einer Streuscheibe 10 ist direkt ein optischer Sender (11) und ein Empfänger (12) angeordnet. Bei einer sauberen Streuscheibe (10) geht die vom Sender (11) emittierte Strahlung fast vollständig durch die Streuscheibe (10) hindurch. Nur ein geringer Anteil wird an der Grenzfläche Glas/Luft reflektiert und trifft auf der Empfänger auf. Mit Hilfe dieses geringen Anteils kann die Funktionsfähigkeit des Senders (11) und des Empfängers (12) ständig überprüft werden. Be-

finden sich Schmutzteilchen (14) auf der Außenseite der Streuscheibe (10) so wird an diesen Licht reflektiert und der im Empfänger (12) auftreffende Anteil der Strahlung nimmt zu. Eine Reinigungsanlage kann ausgelöst werden. Die Vorrichtung baut einfach und ist weitgehend frei von Störeinflüssen.

FIG. 1

2

## Vorrichtung zum optischen Erfassen von Fremdkörpern

Stand der Technik

Die Erfindung geht aus von einer Vorrichtung zum optischen Erfassen von Fremdkörpern auf der Oberfläche einer durchsichtigen Scheibe nach der Gattung des Hauptanspruchs. Bei einer bekannten Vorrichtung wird die von einem Strahlungssensor ausgesandte Strahlung an einer Grenzschicht Glas/Luft unter dem Winkel der Totalreflexion reflektiert. Sie gelangt mit Hilfe aufwendiger prismatischer Vorrichtung und Zwischenschichten zum Empfänger. Diese Vorrichtungen sind notwendig, da die Strahlung die erste und dritte Grenzfläche Glas/Luft möglichst ungehindert durchgringen und an der zweiten auf der Außenseite der Scheibe liegenden Grenzfläche dagegen totalreflektiert werden soll. Ferner ist ein aufwendiges optisches System erforderlich, um die Strahlung nach Austritt aus der Scheibe auf den Empfänger zu fokussieren. Es liegen zwischen den einzelnen optischen Bauteilen und dem Sender bzw. Empfänger mehrere optisch stör-und schmutzempfindliche Grenzflächen, wodurch liecht Verfälschungen der Meßwerte möglich sind. Durch Schmutz auf der Scheibe wird ein Teil der Strahlung unter einem anderen Winkel als dem Winkel der Totalreflexion reflektiert und gelangt dadurch nicht mehr zum Empfänger. Aber auch durch Schmutzteilchen an anderen Stellen des Lichtpfades wird die im Empfänger auftreffende Lichtmenge vermindert, wodurch Fehlmessungen auftreten. Die Vorrichtung ist nur für besondere Zwecke anwendbar.

Vorteile der Erfindung

Die erfindungsgemäße Vorrichtung mit den kennzeichnenden Merkmalen des Hauptanspruchs hat demgegenüber den Vorteil, daß sie besonders einfach und kostengünstig baut. Es läßt sich eindeutig eine nasse und trockene Verschmutzung an den Scheiben unterscheiden und detektieren, so daß eine Reinigungsanlage automatisch nur bei trockenem Schmutz ausgelöst werden kann. Störeinflüsse werden weitgehend verhindert, indem der Sender und der Empfänger an der Innenseite der Scheibe angeordnet und optisch angekoppelt sind. Da nur bei Verschmutzung der Scheibe die Reinigungsanlage ausgelöst wird, sind eine genaue Steuerung der Reinigungsanlage und ein sparsamer Verbrauch des Waschwassers möglich. Insbesondere bei Nachtfahrten wird durch eine stets saubere Scheibe die Fahrsicherheit verbessert, da die Beleuchtungsstärke der Fahrbahn konstant gehalten und eine mögliche Blendung des Gegenverkehrs durch Streulicht vermieden wird. Mit Hilfe der Auswerteschaltung können noch zusätzliche Funktionen bzw. Anzeigevorrichtungen gesteuert werden. Bei Verwendung einer sogenannten Reflexlichtschranke, d.h. Sender und Empfänger sind möglichst nahe beieinander und in einem Gehäuse angeordnet, baut die Vorrichtung besonders klein. Durch ein gemeinsames Gehäuse haben der Empfänger und der Sender immer gleiche Temperatur, so daß keine Störungen durch Temperaturunterschiede auftreten können. Durch die Reflexion einer geringen Strahlungsmenge an der Glenzfläche Scheibe/Atmosphäre in den Empfänger können bei unverschmutzter Scheibe Sender und Empfänger ständig überprüft und auf ihre Funktionsfähigkeit überwacht werden, ohne daß zusätzliche Bauteile bzw. Vorrichtungen notwendig sind.

Durch die in den Unteransprüchen aufgeführten Maßnahmen ist eine vorteilhafte Weiterbildung und Verbesserung der in dem Hauptanspruch angegebenen Merkmale möglich.

Zeichnung

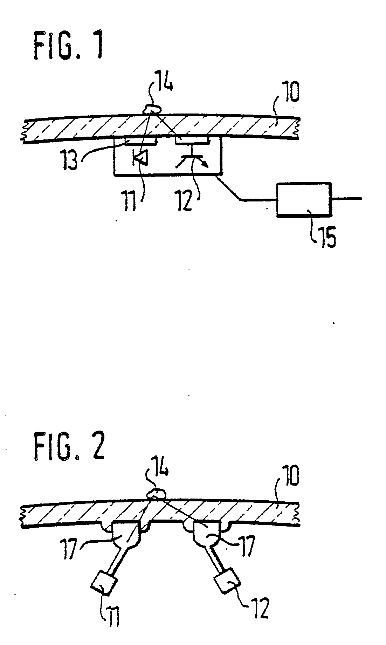

Ein Ausführungsbeispiel der Erfindung ist in der Zeichnung dargestellt und in der nachfolgenden Beschreibung näher erläutert. Es zeigen Figur 1 vergrößert im Schnitt eine Scheibe mit einem zugeordneten Sender und Empfänger und Figur 2 eine Abwandlung des Ausführungsbeispiels.

Beschreibung des Ausführungsbeispiels

In Figur 1 ist mit 10 die Streuscheibe einer Scheinwerferanlage bezeichnet. An der Innenseite der Streuscheibe 10 sind eine strahlungsemittierende Diode als Sender 11 und eine Fotodiode als Empfänger 12 optisch angekittet. Bei der Materialauswahl für den Kitt ist darauf zu achten, daß keine Streuung an der Grenzfläche Lüft/Scheibe auftritt und sein Brechungsindex angepaßt ist. Die optischen Achsen des Senders 11 und des Empfängers 12 sind parallel oder leicht zueinander geneigt. Zwischen Scheibe 10 und Empfänger 12 bzw. Sender 11 ist je ein optisches Filter 13 angeordnet, um den Störlichteinfluß zu verringern. Der Sender 11 und der Empfänger 12 können sich in einem gemeinsamen Gehäuse als sogenannte Reflexlichtschranke befinden.

Die vom Sender 11 in die Streuscheibe 10 eingespeiste Strahlung geht bei einer von Verunreinigungen oder Fremdkörpern 14 freien vorderen Glasoberfläche, d.h. Außenseite, weitgehend ungebrochen durch die Streuscheibe 10 hindurch. Nur eine geringe, an der Grenzfläche Glas/Atmosphäre reflektierte Strahlungsmenge gelangt in den Empfänger 12. Dadurch können die Funktionsfähigkeit des Senders 11 und des Empfängers 12 ständig überwacht werden. Die übrige, nahezu vollständige Strahlungsmenge geht durch die Scheibe hindurch und trifft nicht auf den Empfänger 12 auf.

Befinden sich Fremdkörper 14 auf der vorderen Glasoberfläche, d.h. auf der Außenseite der Streuscheibe 10, so bewirken diese eine Reflexion bzw. Streuung eines Teils der vom Sender 11 ausgesandten Strahlung. Ein Teil der Strahlung gelangt dadurch zum Empfänger 12. Der Empfänger 12 erfaßt alle vom Schmutzteilchen 14 reflektierten Strahlen, die innerhalb des Öffnungskegels des Empfängers 12 liegen, so daß sich bei sauberer Scheibe ein sehr geringes, bei verschmutzter Scheibe ein großes, deutlich unterscheidbares Signal ergibt. Auf diese Weise bewirken die Schmutzteilchen 14 ein Ansteigen der detektierten Strahlungsmenge im Empfänger 12, was durch die nicht näher dargestellte Auswerteschaltung 15 erfaßt wird. Mit Hilfe der Auswerteschaltung können noch Zusatzfunktionen wie Wasserstand usw. gesteuert und überwacht werden. Die Auswerteschaltung kann so gesteuert sein, daß sie nur bei eingeschaltetem Scheinwerferlicht und bei dessen 70 %iger Schwächung ausgelöst wird.

Befinden sich auf der Streuscheibe 120 Wassertropfen, so führen diese aufgrund ihrer optischen Wirkung nicht zu einer Rückstreuung der Strahlung des Senders 11, sondern sogar zu einer verstärkten Auskopplung der Strahlung nach außen. Das Empfängersignal nimmt dadurch nicht zu, sondern wird im Extremfall sogar leicht geschwächt. Da die Auswerteschaltung 15 nur bei einer Erhöhung des Empfängersignals die Reinigungsanlage auslöst, ist eine eindeutige Steuerung möglich.

Bei nassem Schmutz, d.h. befindet sich im Wassertropfen ein Anteil an festen Schmutzteilchen, so überwiegt klar die Rückstreuung der Strahlung an den festen Schmutzteilchen 14, so daß der reflektierte Anteil der Strahlung zunimmt und die Reinigungsanlage ausgelöst wird.

In der Abwandlung des Ausführungsbeispiels sind in Figur 2 der Sender 11 und der Empfänger 12 mit Hilfe von Kunststoffparaboloiden 17 an der Innenseite der Scheibe 10 befestigt. Es ist auch denkbar, mit Hilfe von Lichtleitern die Strahlung in die Scheibe ein- bzw. auszukoppeln.

Vorzugsweise wird als Sender eine IR(infrarot)-Lichtlampe verwendet. Diese Strahlungsquelle kann sehr leicht getaktet werden und sendet Strahlung mit einer bestimmten Frequenz aus. Dadurch erhält man eine hohe Störsicherheit gegen Fremdlicht oder durch das z.B. an Wänden bzw. anderen Fahrzeugen reflektierte Scheinwerferlicht. Diese Strahlungsquelle sollte im Reinigungsbereich aber nicht im Strahlenbereich des Scheinwerfers liegen. So kann eine thermische Aufheizung des Senders 11 und des Empfängers 12 vermieden werden.

Die Vorrichtung kann für alle zu reinigenden Scheiben eines Fahrzeuges, insbesondere Kraftfahrzeuges, verwendet werden. Es können sowohl die Streuscheiben der Frontleuchten als auch die Streuscheiben der Hecklichter und Blinker überwacht werden. Es genügt auch nur einen einzigen Sensor für beide Scheinwerfer zu verwenden, der dann auf der stärker verschmutzten Seite, bei Rechtsverkehr auf der linken Fahrzeugseite, angebracht wird.

## Ansprüche

1. Vorrichtung zum optischen Erfassen von Fremdkörpern (14) auf der Oberfläche einer durchsichtigen Scheibe (10), mit wenigstens einem Strahlungssender (11) und einem Strahlungsempfänger (12), dadurch gekennzeichnet, daß der Strahlungssender (11) und der Strahlungsempfänger (12) an der Innenseite der Scheibe (10) so angeordnet sind, daß der Strahlungsempfänger (12) die an den Fremdkörpern (14) reflektierte Strahlung mißt.

2. Vorrichtung nach Anspruch 1, dadurch gekennzeichnet, daß zwischen dem Strahlungssender (11) und der Scheibe (10) bzw. der Scheibe (10) und dem Strahlungsempfänger (12) je ein so geformter Kunststoffkörper (17) angeordnet ist, daß die Strahlung flächig gespreizt auf die Oberfläche der Scheibe (10) einbringbar ist.

3. Vorrichtung nach Anspruch 1, dadurch gekennzeichnet, daß die Strahlung vom Strahlungssender (11) zur Scheibe (10) bzw. von der Scheibe (10) zum Strahlungsempfänger (12) mit Hilfe von Faserleitungen übertragen wird.

4. Vorrichtung nach einem der Ansprüche 1 bis 3, dadurch gekennzeichnet, daß die optischen Achsen des Strahlungssenders (11) und des Strahlungsempfängers (12) unter einem geringen Winkel zueinander geneigt sind.

5. Vorrichtung nach einem der Ansprüche 1 bis 4, dadurch gekennzeichnet, daß der Strahlungssender (11) und der Strahlungsempfänger (12) möglichst nahe beieinander als sogenannte Reflexlichtschranke angeordnet sind.

6. Vorrichtung nach einem der Ansprüche 1 bis 5, dadurch gekennzeichnet, daß der Strahlungssender (11) und der Strahlungsempfänger (12) im Infrarotbereich arbeiten.

7. Vorrichtung nach einem der Ansprüche 1 bis 6, dadurch gekennzeichnet, daß der Strahlungssender (11) moduliert ist und eine Auswerteschaltung (15) nur für Strahlung dieser Modulation empfindlich ist.

8. Vorrichtung nach einem der Ansprüche 1 bis 7, dadurch gekennzeichnet, daß die Scheibe (10) die Streuscheibe eines Scheinwerfers eines Kraftfahrzeugs ist.

9. Vorrichtung nach einem der Ansprüche 1 bis 8, dadurch gekennzeichnet, daß die Scheibe (10) die Streuscheibe der Hecklichter des Kraftfahrzeugs ist.

## FIG. 1

## FIG. 2